# EUROPEAN PATENT APPLICATION

(11) **EP 0 869 699 A2**
(43) Date of publication of application: **07.10.1998**
(21) Application number: 98301706.2
(22) Date of filing: 09.03.1998
(51) Int. Cl.: H05B 3/82, H05B 3/26

(54) **Electric element assembly**

(30) Priority: 07.03.1997 GB 9704716
(71) Applicant: SHEATHED HEATING ELEMENTS LIMITED, Worsley, Manchester M28 2DP (GB)
(72) Inventor: Hunt, Andrew, Bowden, Cheshire WA14 3FD (GB)
(74) Representative: Linn, Samuel Jonathan

(57) **Abstract**

An electric element assembly (2) for a liquid heating vessel, such as a kettle, comprises a heating element in the form of an electrically conductive track (4) provided on at least one face (62) of a stainless steel support plate (6) and connectable to a power supply, the track (4) being electrically insulated from the support plate (6), and a temperature sensitive switch (8) capable of electrically insulating the track (4) from the power supply in the event that the temperature of the track (4) exceeds a predetermined threshold value, wherein the temperature sensitive switch (8) is mounted directly on the support plate (6) and in direct thermal contact with the conductive track (4). In a preferred form the temperature sensitive switch (8) comprises an electrically conductive bridge member (20) extending between one end (44) of the conductive track (4) and a respective connection element (12), the bridge member (20) being biassed towards a closed position in which it contacts both the said track end (44) and the respective connector (12), so as to form an electrical connection therebetween.

## Description

This invention relates to an electric element assembly for liquid heating purposes, and more particularly to such an assembly in which the heating element is provided on a support plate in the form of an electrically conductive track. The invention is especially, though not exclusively, applicable to electric kettles and other water heating vessels and appliances.

The most common conventional form of heating element used for liquid heating applications such as kettles, washing machines, showers etc. comprises a resistance heating wire disposed within and electrically insulated from a tubular metal sheath. These sheathed heating elements are generally mounted in electrical and thermal communication with a separately manufactured control device comprising the necessary components for connecting the element to a power supply and also to a temperature sensitive device for automatically disabling the element from the power supply in the event that it overheats.

Typically the control device is mounted externally of the liquid receptacle of the appliance and is connected to the heating element (which is necessarily mounted within the liquid receptacle) via an opening in the receptacle wall which is fitted with a seal to prevent liquid leaking out of the receptacle during use.

Known sheathed heating element assemblies as described above exhibit several problems. For instance, the necessarily convolated shape of the heating element makes it very difficult to clean, resulting in the build up of deposits such as limescale on the surface of the element. Not only do such deposits reduce the efficiency of the heating action of the element, but they also render the appearance of the element aesthetically displeasing. Such conventional sheathed heating elements may also in themselves be frequently considered to be of unattractive appearance.

A further disadvantage associated with known sheathed heating elements arises from the need to fully cover the heating element with liquid during heating, in order to prevent any part of it from overheating. The convoluted shape of a conventional sheathed element is such that it is necessary to heat a substantial volume of water to meet this criterion. In some practical situations, this volume of water may be greater than the volume actually required by the user, resulting in wastage and the consumption of more electrical energy than is actually needed.

The provision of the control device as a separate assembly to be connected to the heating element during the assembly of the appliance is also disadvantageous. For proper operation of the device, it is necessary to ensure good electrical and thermal communication between the heating element and the control device, while ensuring that the opening in the receptacle wall via which they are connected is sealed so as to prevent leakage of liquid from within the appliance when it is used. The assembly of the appliance therefore necessarily involves accurate alignment and mutual mounting of a relatively complex multiple-component assembly, adding to the cost and complexity of the assembly process. Furthermore, a temperature sensitive cut-out device included in the control device is unavoidably spaced from the water heating portion of the heating element, which is that part of the element whose temperature is needed to be sensed. This means that problems in optimizing the thermal and/or electrical conductivity characteristics of the path between the water heating portion of the element and the cut-out device are frequently encountered and have to be addressed.

A known alternative form of electric element assembly for liquid heating purposes is of the so-called thick film or plate-type, which comprises a support plate having a heating element provided on at least one of its surfaces in the form of a resistive conductive track. An example of an assembly of this type is described in published International Patent Application W094/18807 (Strix Limited). The track is applied to the support plate by means of known printed circuit technology. This described element assembly includes a clamping part adapted to be connected to a conventional control device of the type referred to above, i.e. it is connected to a separate external control device which includes a thermal cut-out via a peripherally sealed opening in a wall of the liquid receptacle of the appliance into whose base the element assembly is mounted.

These known plate-type heating elements are more easily cleaned and are generally more aesthetically pleasing in appearance than the traditional tubular sheathed elements. Additionally, they can be made more compact than a sheathed element of comparable power, thus requiring a smaller minimum volume of heating liquid for safe operation. However, such plate-type heating elements still share some of the other problems exhibited by conventional sheathed elements, especially in that they are still required to be connected to an external control device which includes the temperature-sensitive cut-out components, and so similar problems as are associated with this feature of known tubular sheathed elements are still faced.

Furthermore, arranging for the plate element to be readily connectable to a conventional external control device may complicate the manufacture of the element and can also complicate the process of assembling the appliance. For example, W094/18807 referred to above describes a plate-type heating element in which the support plate is a unitary member bent into an L-shape to provide a generally horizontal liquid heating portion in the base of the vessel and a generally vertical mounting portion for mounting the plate onto the vessel wall and connecting it to a control device via an opening in the vessel sidewall in a conventional manner. It is acknowledged in W094/18807 that this configuration of heating element complicates the formation of the conductive track on the support plate since it must extend around the sharp bend in the support plate. With this in mind, W094/18807 discloses an alternative plate element in the form of a flat plate connected to a control device via an opening in the base of the vessel. However, even with this modified construction of plate-type heating element, the overall manner of assembly is complex and it may not always be desirable or even possible to provide the control device in the base of the vessel beneath the heating element, thus restricting the practical versatility of such an element.

It is an object of the present invention to overcome or ameliorate at least some of the above-described problems associated with known plate-type heating elements and to provide a plate-type heating element assembly including temperature-sensitive cut out means for disabling the device in the event of its overheating, which is cheap and easy to manufacture and to assemble into a liquid heating appliance.

Accordingly, the present invention provides an electric element assembly for a liquid heating vessel, the assembly comprising a heating element in the form of an electrically conductive track provided on at least one face of a support plate and connectable to power supply means, the track being electrically insulated from the support plate, and a temperature sensitive switch capable of electrically isolating the track from the power supply in the event that the temperature of the track exceeds a predetermined threshold value, wherein the temperature sensitive switch is mounted directly on the support plate and in direct thermal contact with the conductive track.

Advantageously, an electric element assembly according to the invention may be manufactured as a single unitary assembly that can be subsequently mounted in the liquid heating vessel.

The need for a discrete thermal connection means from the heating element to a separate external control device for providing the thermal cut-out facility is eliminated in accordance with the invention, by virtue of the temperature sensitive switch being mounted directly on the heating element support plate, thereby considerably simplifying and reducing the cost of the assembly of the liquid heating appliance. Furthermore, the temperature sensitive switch is mounted on the support plate in direct thermal contact with the conductive track, and thus is preferably mounted on a portion of the support plate which carries a liquid heating portion of the conductive track, thereby enhancing the speed and sensitivity of actuation of the cout-out device in sensing overheating of the element, compared with known element assemblies in which the temperature sensitive switch is isolated from and not in direct thermal contact with the liquid heating portion of the element.

Plate-type heating elements comprising a support plate having a conductive track provided thereon are known in the art and may be formed using known printed circuit technology, e.g. using a printing and firing process. Thus, suitable methods for forming the conductive track on the support plate of the element assembly of the present invention will be readily apparent and available to persons skilled in the art.

In preferred embodiments of the invention the support plate is of a material which is a relatively good conductor of heat, i.e. it is preferably of metal or metal alloy. Stainless steel is particularly preferred, especially due to its resistance to corrosion. The support plate may be of any suitable size and/or shape, as desired or dictated by the dimensions and shape of the vessel into which the heating element assembly is to be mounted. However, most preferably the support plate is substantially flat and in the context of electric kettles may be generally circular or possibly rectangular.

In accordance with the invention, the support plate is electrically insulated from the conductive track provided thereon. In preferred embodiments of the invention, so as not to detract from the good thermal conductivity which the plate material preferably has, this insulation may be achieved by preforming on the top surface of the support plate a layer of an electrically insulating material, for example glass ceramic, over the top of which the conductive track is applied.

The conductive track may be formed from any suitable high resistance material, examples of which are well known in the art and include palladium silver, and conductive inks. The track may be formed in any desired pattern on the surface of the insulated plate, but is preferably laid down in a pattern which optimises the use of the surface area of the plate, for example a serpentine or a spiral pattern. Preferably the track covers substantially the whole of the top surface of the support plate. The cross-sectional area of the track and its length may be selected such that the track has the necessary electrical resistance to generate and dissipate heat at the desired level and rate for the application for which the heating element is intended. A similar layer of insulating material, e.g. glass ceramic, may be applied over the top of the conductive track once it is formed, in order to isolate and electrically insulate it from liquid to be heated when in use.

In most embodiments of the element assembly of the invention the conductive track will be provided on one face only of the support plate. That face may be the lower or the upper face of the plate, which may depend primarily on the form of mounting of the assembly in the heating appliance, possibilities for which are described further below. For example, in the case where the heating element is to be of the immersion type, where in use it is substantially totally surrounded by liquid to be heated, then the conductive track may be provided on either or both faces of the support plate. If the track is provided on both faces of the plate, then preferably both tracks are connected in series to constitute a single length of heating element track. In the case where the heating element is to form the base or a portion of the base of the heating vessel, then the conductive track may be provided on only the upper or alternatively only the lower surface of the support plate. In the latter case, the support plate's top surface will dissipate the generated heat to the liquid to be heated, with the element preferably being mounted in a heat resistant or insulating enclosure or casing so that the heating track on the lower surface of the plate is thermally insulated from the remainder of the heating appliance in the region of the heating element mounting.

The conductive track is electrically connectable to a power supply using any suitable connection means, examples of which are well known in the art. For instance, each end of the track may terminate in or be connected to a respective connector element, for example a pin, socket or spade connector, which is either formed integrally with the track or connected to it after its formation on the support plate. Element assemblies according to the present invention that are intended for use in kettles preferably include conventional plug-type pins for a cable connection to the power supply or a "cordless" connection mounting for forming the necessary electrical connections upon placement of the heating appliance in a mounting station which is itself connected to the power supply.

Preferably, the temperature sensitive switch of the element assembly of the invention comprises a thermally sensitive element in direct thermal contact with the conductive track and which acts to open at least one pair of electrical contacts between which the electrical circuit including the conductive track is formed, in the event that the temperature of the track exceeds the predetermined threshold. The opening of the said pair of contacts results in the electrical circuit being broken and therefore the conductive track disconnected from the power supply.

In particularly preferred embodiments of the element assembly of the invention, the temperature sensitive switch comprises an electrically conductive bridge member extending between one end of the conductive track and a respective connection element, the bridge member being biased towards a closed position in which it contacts both the said track end and the respective connector, so as to form an electrical connection therebetween. Alternatively, the bridge member may extend across a break in the track and be biased towards a closed position in which it contacts the track on both sides of the break. In both cases, the switch further comprises a bimetal element in direct thermal contact with the track, the bimetal element being constructed and arranged such that when the temperature of the track exceeds the predetermined threshold, it deforms to displace the bridge member from the closed position into an open position in which the contact between the bridge member and the end of the track or the respective connector element (or the bridge member and the track on one or both sides of the break therein, as the case may be) is broken, thereby breaking the electrical circuit and disconnecting the track from the power supply.

The bridge member may be mounted on the support plate and biased towards the closed position for example by resiliently flexible mounting means. More preferably, the bridge member may itself be resiliently flexible and arranged such that it is normally biased towards the closed position.

In a preferred practical embodiment of the invention a resiliently flexible electrically conductive bridge member is attached at one of its ends to one end of the conductive track for example by soldering, welding or rivetting, and is biased towards a position corresponding to the above-defined closed position in which its opposite end contacts a respective connector element. Alternatively of course, the bridge member may be attached to the respective connector element and biased to contact the end of the track. In this way the track end and the respective connector element are electrically connected via the bridge member. A similar arrangement can be used in embodiments of the invention in which the bridge member extends across a break in the track.

The bridge member may be formed from any suitably resilient and electrically conductive material, for example spring steel, and may take any suitable form, for instance it may take the general form of a leaf spring or a cantilever spring. In order to ensure a good electrical connection between the bridge member and the connector element and/or track, the contacting portions of these parts are preferably formed of a low electrical resistance material, for example copper. These contact portions may be provided as separate contact elements bonded onto the bridge member and connector element and/or track for example by welding, soldering or rivetting. Alternatively these contact portions may be coated with the low electrical resistance material. A further alternative for providing a low electrical resistance contact portion on the track is to actually form a portion of the track from the low electrical resistance material.

The bimetal element will typically be a snap-action bimetal, so as to effectively provide a bistable switching action. Typically the bimetal element will be selected to respond to a temperature approximately 20° to 50° above the maximum desired operating temperature of the heating element. For instance, in the case of water boiling appliances the bimetal will typically be selected to snap over at a temperature of between about 120° and 150°C.

In particularly preferred embodiments of the invention the bimetal element and bridge member of the temperature-sensitive switch are provided as separate elements, the bimetal element for instance being disposed between the support plate and the bridge member and arranged such that when it responds to the overheating of the heating element it pushes the bridge member away from the support plate into the above-defined open position in which the power supply circuit is broken. In other, less preferred, embodiments the bimetal element may be provided as an integral part of the bridge member, and arranged such that when it responds to overheating of the element it causes the bridge element to itself deform into the open position.

A particularly preferred embodiment of the electric element assembly according to the invention additionally includes a "one-shot" secondary thermal cut-out means, whose purpose is to permanently break the power supply circuit to permanently disable the heating element in the event that it overheats and the primary temperature sensitive switch fails to operate or does not operate correctly. Typically, the secondary thermal cut-out is designed to operate when the heating element reaches a temperature of approximately 100°C above the maximum operating temperature of the element. For instance, in the case of a water boiling appliance the secondary thermal cut-out is typically designed to operate when the temperature of the heating element exceeds approximately 200°C.

Secondary, one-shot thermal cut-outs are widely used in known electric heating elements assemblies and examples suitable for use in assemblies according to the present invention will therefore be readily apparent and available to persons skilled in the art. For example, the conductive track on the support plate may include a section formed from a low melting point alloy, or in the heating element construction a melting pillar may be used to hold together a set of master electrical contacts that are normally closed but inherently biased towards an open position.

Alternatively, and particularly conveniently, the secondary thermal cut-out may be provided integrally with the primary temperature sensitive switch. For example, the bridge member of the temperature-sensitive switch may be attached to the conductive track or the connector element, as the case may be, using a solder that melts at the desired secondary thermal cut-out operating temperature (e.g. around 200°C for water boiling appliances), so that when the heating element overheats and reaches this temperature the solder melts and the bridge member is then free to detach itself from the track or connector element. This self-detachment capability is preferably achieved by virtue of the bridge member being itself a resilient member, for example a leaf spring, arranged to urge the soldered portion of the bridge member away from the track or connector element, as the case may be. Alternatively, a discrete resilient member may be arranged between the track and the bridge member to provide the same function. In this way the primary temperature sensitive switch and the secondary thermal cut-out are constituted by different parts of the same single mechanical device, which has the additional advantage of further simplifying the construction of the assembly and reducing its manufacturing cost.

Electrical element assemblies according to the present invention may be used in a variety of liquid heating appliances, including for example kettles, showers, washing machines, water heating tanks, etc.

The electric element assembly of the invention is especially suited for use in domestic electric kettles. In this case, the element assembly is preferably mounted in the base portion of the kettle.

In one, less preferred, form, the element assembly is mounted with substantially both sides of the support plate exposed to the interior of the kettle and thus in use contacted with the water placed in the vessel for heating. In this construction it is necessary to electrically insulate the current carrying components of the assembly from the interior of the kettle to prevent water from contacting them and causing short circuits. This can readily be accomplished by enclosing the temperature sensitive switch, the secondary thermal cut-out (if provided), the connector elements and any other additional circuitry, in a water-tight cover, housing or compartment mounted on the support plate. Typically the connector elements will protrude through a sealed orifice in a side wall or the base of the kettle to enable electrical connection to be made to the power supply.

In another, more preferred, form, the element assembly forms the base or a portion of the base of the heating vessel of the kettle itself, so that in use the water to be heated contacts only the top face of the support plate. In the case where the conductive heating track is carried on the top face of the support plate, i.e. that face which is contacted by the water upon use, the components of the primary temperature-sensitive switch and (if provided) the secondary thermal cut-out may be provided on the same top surface of the plate and thus most readily connected to the conductive track and connector elements. In this case, a similar water-tight cover or housing as described above will be provided to isolate these and any other current carrying components from the water to be heated in the vessel. As an alternative, the primary and secondary switch components may be mounted beneath the support plate, which thus obviates the need for a water-tight housing. However, in this arrangement it will be necessary to provide means for direct electrical connection between the track on the top face of the plate and the various switch cut-out components mounted on the bottom face of the plate. Furthermore, it may be necessary to also provide an additional heat transfer means, e.g. a heat sink element, between the conductive track and the temperature-sensitive switch and (if provided) secondary thermal cut-out over and above that provided by the thermal conductivity of the material of the support plate itself.

In the case where the conductive heating track is provided solely on the bottom face of the support plate, the components of the temperature-sensitive switch and secondary thermal cut-out can be simply mounted directly onto the plate without the necessity for a water-tight housing, since the mounting into the base of the water heating vessel can provide the necessary insulation from water to be contained within the heating vessel.

In all of the above cases, the heating element assembly is preferably mounted in the kettle at a small angle (e.g. from 1° to 15°) away from the horizontal, such that a portion of the conductive track which is that portion on which the primary temperature sensitive switch is mounted, is at a higher level than the remainder of the track, so that that portion is the first portion to be uncovered and therefore to overheat in the event that there is insufficient water in the kettle. This helps to ensure that the temperature sensitive switch reacts as quickly as possible to potential total overheating of the element.

A particularly preferred embodiment of the electric element assembly of the present invention will now be described in detail, by way of example, with reference to the accompanying drawings, in which:
Figure 1 is a bottom plan view of the preferred embodiment of the electric element assembly according to the invention;
Figure 2 is an end elevational view of the assembly of Figure 1;
Figure 3 is a partial end elevational view of the assembly of Figure 1, on an enlarged scale, additionally showing the configuration of the assembly after operation of the temperature-sensitive switch included therein;
Figure 4 is a partial end elevational view of the assembly of Figure 1, on an enlarged scale, corresponding to that shown in Figure 3, and showing the configuration of the assembly after operation of the secondary thermal cut-out included therein; and
Figure 5 is a part-sectional side view of the element assembly of Figure 1 mounted in the base of a kettle.

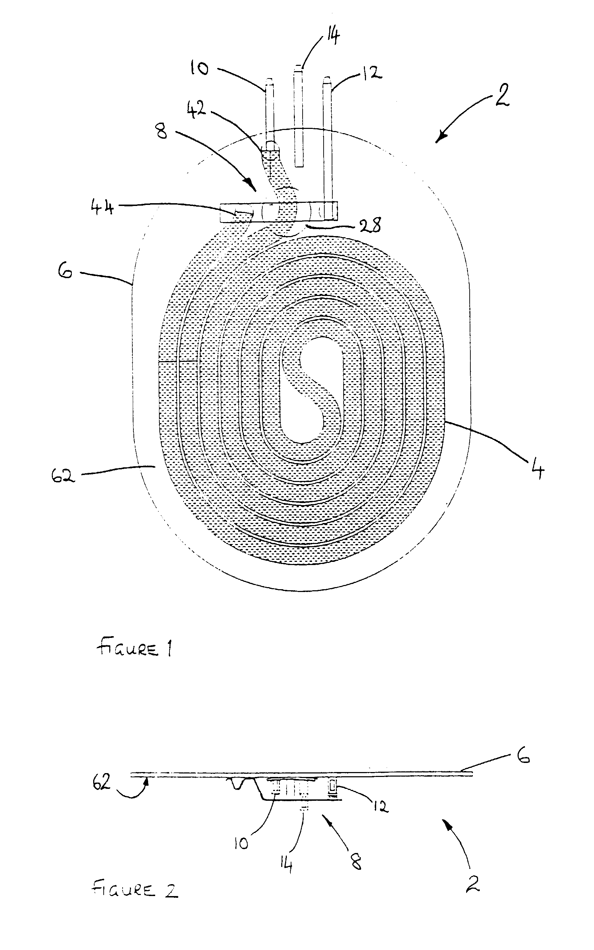

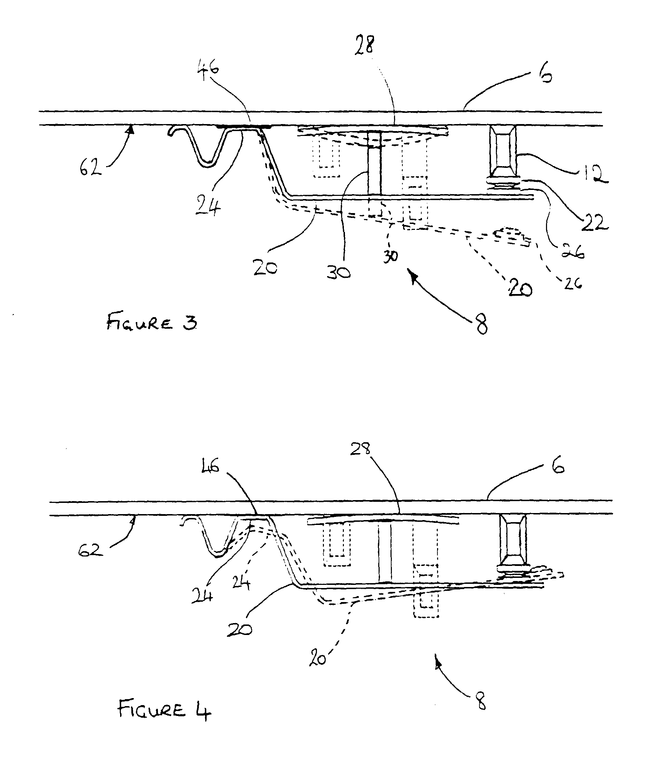

Referring firstly to Figures 1 and 2, an electric element assembly 2 comprises a plate-type heating element in the form of an electrically conductive track 4, a support plate 6 upon a surface 62 of which the track 4 is provided, a temperature-sensitive switch 8 mounted on the support plate and in direct thermal contact with the track 4, and first and second pin connectors 10,12 mounted on one end of the support plate 6 and electrically connected to respective first and second ends 42,44 of the track 4. The pin connectors 10,12 constitute means by which the track 4 can be connected to a power supply (not shown). The assembly 2 further comprises an earth pin 14 mounted on the support plate 6 at the same end thereof as the pin connectors 10,12, by means of which the support plate 6 may be connected to earth during operation of the element assembly 2, this being desirable from the point of view of safety and even mandatory by law in the case at least of domestic heating appliances.

The support plate 6 is of stainless steel and is substantially flat, as best seen in Figure 2. The surface 62 of the plate 6 upon which the track 4 is carried is coated with electrically insulating glass ceramic, thus electrically insulating the track 4 from the plate 6. The conductive track 4 is of conductive ink and is applied to the insulated surface 62 of the support plate 6 in a spiral pattern, the two ends 42,44 of the track 4 terminating generally adjacent one another adjacent the end of the support plate 6 on which the pin connectors 10,12 are mounted. A second electrically insulating coating of glass ceramic is applied to the support plate 6 over the top of the track 4 to remove any risk of the track being electrically short circuited by dirt, debris, condensation or some other foreign body that comes into contact with the surface 62 of the plate 6 during operation of the element assembly 2. The track 4 and various insulating glass ceramic layers may be applied to the support plate 6 using for example a printing and firing process, as is already known per se in the art of plate-type heating elements.

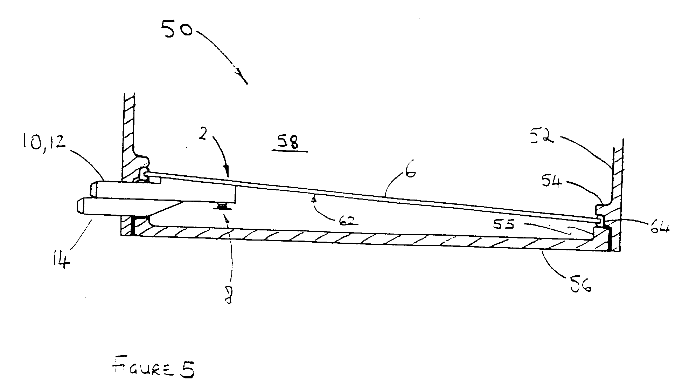

As is best seen in Figure 3, the temperature sensitive switch 8 of the assembly comprises an electrically conductive bridge member 20 forming an electrically conductive bridge between contacts 46,22 respectively formed at the second end 44 of the track 4 and provided on the second pin connector 12. The bridge member 20 is resiliently flexible, being formed from a strip of spring steel. The bridge member 20 has a first contact portion 24 which contacts and is soldered to the contact portion 46 formed at the said second end 44 of the track 4. By virtue of its construction and arrangement, the bridge member 20 is biassed towards a closed position in which a second contact portion 26 thereof abuts the contact 22 provided on the second pin connector 12. Thus, when the bridge member 20 is in the closed position, the track 4 and the second pin connector 12 are electrically connected to one another, and if an electrical power supply is connected across the pin connectors 10,12 an electrical circuit is formed and the track 4 will be energised. The second contact portion 26 of the bridge member 20 and the contact 22 of the second pin connector 12 are formed by copper inserts or studs soldered onto the bridge member 20 and second pin connector 12, respectively.

The temperature-sensitive switch further comprises a snap-action bimetal disc 28 mounted on the surface 62 of the support plate 6 and in direct thermal contact with a "hot" portion of the track 4 adjacent its first end 42 which is connected to first pin connector 10. A push-rod 30 (which may for example be bonded to either or both of the bimetal disc 28 and the bridge member 20) extends between a central portion of the bimetal disc 28 and the bridge member 20. The bimetal disc 28 is constructed and arranged such that when the temperature of the track 4 exceeds a nominal threshold of about 120°C the central portion of the disc 28 snaps from a first bistable position in which it contacts the surface 62 of the support plate 6 into a second bistable position in which it is spaced from the plate surface 62, thereby displacing the push-rod 30 and consequently the bridge member 20 so as to break the electrical contact between the second contact portion 26 of the bridge member 20 and the contact 22 of the pin connector 12 (illustrated in Figure 3 in phantom lines), thereby electrically isolating the track 4 from the power supply. When the temperature of the track 4 falls below the nominal threshold again, the bimetal disc 28 snaps back to its first bistable configuration and the resilience of the bridge member 20 causes the contact between the aforementioned contact portions 22,26 to be re-made, thereby reclosing the circuit and once more reconnecting the track 4 to the power supply.

Referring to Figure 4, the solder used for the soldered contact between the first contact portion 24 of the bridge member 20 and the contact 46 formed at the second end 44 of the track 4, is selected such that its melting point is about 200°C. Additionally, the bridge member 20 is constructed and arranged such that it urges the said soldered contact to open when the solder melts. Thus, when the temperature of the track 4 reaches the melting point of the solder, as may be the case in the event that the track 4 overheats and the bimetal-operated switch fails to operate correctly, the soldered contacts spring apart into an open position (as illustrated in Figure 4 in phantom lines) thereby permanently breaking the circuit and electrically isolating the track 4. Unlike the bimetal-operated switch, a subsequent fall in the temperature of the track will not cause the contact to be re-made, i.e. the soldered joint acts as a "one-shot" secondary thermal cut-out.

Figure 5 shows an exemplary arrangement for mounting the electric element assembly 2 in the base of a kettle 50. The periphery of the support plate 6 is clamped between an annular protrusion 54 formed internally on the wall 52 of the kettle 50, and an annular lip 55 protruding upwardly from a base part 56 of the kettle 50. The kettle base part 56 is preferably a separate constructional element of the assembly and is assembled with the remaining components once the heating element assembly 2 is in position, as shown. The base part 56 may be conveniently retained in place by means of any suitable fixing means (not shown in Figure 5 for clarity), e.g. screws, welding, adhesive bonding or any other suitable means as is customarily used in the kettle art. A seal 64 extends around the periphery of the support plate 6 to form a water-tight seal between the support plate 6 and the kettle wall 52.

A heating vessel 58 within which water may be heated is defined by the kettle wall 52 and the support plate 6 which forms at least a portion of the base thereof. The electric element assembly 2 is mounted such that the support plate surface 62 on which the track 4, temperature-sensitive switch 8, pin connectors 10,12 and earth pin 14 are provided, is lowermost, i.e. that surface which water contained in the heating vessel 58 does not contact.

The electric element assembly 2 is mounted in the kettle at a small angle (about 5°) to the horizontal such that an end portion of the support plate 6 upon which the temperature-sensitive switch 8 is provided is raised as compared with the opposite end of the support plate 6. As a result of this, assuming the kettle is supported in use on a generally horizontal surface, in the event that there is insufficient water in the kettle to cover the whole of the upper surface of the support plate 6, the raised end portion will be uncovered, thus helping to ensure that the temperature-sensitive switch detects overheating of the element as quickly and sensitively as possible.

The pin connectors 10,12 and the earth pin 14 of the element assembly protrude through an orifice in the kettle wall 52 and are suitably configured such that they may be connected to a power supply using a conventional kettle lead.

It is to be understood that the present invention has been described above by way of example only with reference to a specific exemplary preferred embodiment. Many variations and modifications from what has been specifically described and illustrated are possible within the scope of the invention, as will be readily apparent to persons skilled in the art.

## Claims

1. An electric element assembly for a liquid heating vessel, the assembly comprising a heating element in the form of an electrically conductive track provided on at least one face of a support plate and connectable to power supply means, the track being electrically insulated from the support plate, and a temperature sensitive switch capable of electrically insulating the track from the power supply in the event that the temperature of the track exceeds a predetermined threshold value, wherein the temperature sensitive switch is mounted directly on the support plate and in direct thermal contact with the conductive track.

2. An electric element assembly according to claim 1, wherein the temperature sensitive switch is mounted on a portion of the support plate which carries a liquid heating portion of the conductive track.

3. An electric element assembly according to claim 1 or claim 2, wherein the support plate is electrically insulated from the conductive track by means of a preformed layer of an electrically insulating material on the top surface of the support plate, over the top of which insulating layer the conductive track is applied.

4. An electric element assembly according to any one of claims 1 to 3, wherein the conductive track has a serpentine or spiral configuration.

5. An electric element assembly according to any preceding claim, wherein a layer of insulating material is applied over the top of the conductive track on the support plate, in order to isolate and electrically insulate the track from liquid to be heated by the element.

6. An electric element assembly according to any preceding claim, wherein the conductive track is provided on one face only of the support plate.

7. An electric element assembly according to any one of claims 1 to 5, wherein the conductive track is provided on both faces of the support plate, the track on both said faces being connected in series to constitute a single length of heating element track.

8. An electric element assembly according to claim 7, wherein the heating element is mounted in a heat resistant or insulating enclosure or casing so that the heating track on the surface of the plate opposite that for dissipating heat to a liquid to be heated by the element is thermally insulated from the remainder of a heating appliance into which the assembly is mounted in the region of the heating element mounting.

9. An electric element assembly according to any preceding claim, wherein the temperature sensitive switch comprises a thermally sensitive element in direct thermal contact with the conductive track and which acts to open at least one pair of electrical contacts between which the electrical circuit including the conductive track is formed, in the event that the temperature of the track exceeds the predetermined threshold.

10. An electric element assembly according to claim 9, wherein the temperature sensitive switch comprises an electrically conductive bridge member extending between one end of the conductive track and a respective connection element, the bridge member being biassed towards a closed position in which it contacts both the said track end and the respective connector, so as to form an electrical connection therebetween.

11. An electric element assembly according to claim 9, wherein the temperature sensitive switch comprises an electrically conductive bridge member extending across a break in the track and biassed towards a closed position in which it contacts the track on both sides of the break.

12. An electric element assembly according to claim 10 or claim 11, wherein the thermally sensitive element of the switch comprises a bimetal element in direct thermal contact with the track, the bimetal element being constructed and arranged such that when the temperature of the track exceeds the predetermined threshold, it deforms to displace the bridge member from the closed position into an open position in which the contact between the bridge member and the end of the track or the respective connector element (or the bridge member and the track on one or both sides of the break therein, as the case may be) is broken, thereby breaking the electrical circuit and disconnecting the track from the power supply.

13. An electric element assembly according to any one of claims 10 to 12, wherein the bridge member is mounted on the support plate and biassed towards the closed position by resiliently flexible mounting means.

14. An electric element assembly according to any one of claims 10 to 12, wherein the bridge member is itself resiliently flexible and arranged such that it is normally biassed towards the closed position.

15. An electric element assembly according to claim 14, wherein the bridge member is attached at one of its ends to one end of the conductive track, or one side of the break in the track, as the case may be, and is biassed towards a position corresponding to the closed position in which the opposite end of the bridge member contacts a respective connector element or the other side of the break in the track, as the case may be.

16. An electric element assembly according to any one of claims 10 to 15, wherein the thermally sensitive element and the bridge member are provided as separate elements, the thermally sensitive element being disposed between the support plate and the bridge member and arranged such that when it responds to the overheating of the heating element, it pushes the bridge member away from the support plate into the open position in which the power supply circuit is broken.

17. An electric element assembly according to any one of claims 10 to 15, wherein the thermally sensitive element is provided as an integral part of the bridge member, and arranged such that when it responds to overheating of the element, it causes the bridge element to itself deform into the open position.

18. An electric element assembly according to any preceding claim, further including a secondary thermal cut-out means which acts to permanently break the power supply circuit to permanently disable the heating element in the event that it overheats and the temperature sensitive switch fails to operate or does not operate correctly.

19. An electric element assembly according to claim 18, wherein the secondary thermal cut-out means is provided as an integral part of the temperature sensitive switch.

20. A liquid heating apparatus including an electric element assembly according to any preceding claim.

21. A liquid heating apparatus according to claim 20, wherein the heating element assembly is mounted at an angle from 1 to 15° away from the horizontal, such that a portion of the conductive track which is that portion on which the temperature sensitive switch is mounted is at a higher level than the remainder of the track, so that that portion is the first portion to be uncovered and therefore to overheat in the event that there is insufficient water in the apparatus.
